# EUROPEAN PATENT SPECIFICATION

(11) **EP 0 765 455 B1**
(45) Date of publication and mention of the grant of the patent: **12.04.2000**
(21) Application number: 95922860.2
(22) Date of filing: 16.06.1995
(51) Int. Cl.: F24D 19/10, F16K 11/04

(54) **APPARATUS FOR CONTROL OF PRESSURE AND FLOW, RESPECTIVELY, IN COOLING OR HEATING SYSTEMS**
VORRICHTUNG ZUR REGELUNG DES DRUCKES UND DER STRÖMUNG IN KÜHL-ODER HEIZANLAGEN
APPAREIL DE COMMANDE DE LA PRESSION ET DU DEBIT DANS DES SYSTEMES DE REFROIDISSEMENT OU DE CHAUFFAGE

(30) Priority: 16.06.1994 SE 9402112
(43) Date of publication of application: 02.04.1997
(73) Proprietor: Tour & Andersson Hydronics Aktiebolag, 520 30 Ljung (SE)
(72) Inventor: LENBERG, Lars, S-465 31 Nossebro (SE); LILJESTRAND, Bo, S-520 26 Trädet (SE); IVARSSON, Per, (SE)
(74) Representative: Siebmanns, Hubertus
(86) International application number: SE9500739
(87) International publication number: WO9534761

(56) References cited:
- DE-A- 3 828 367
- DE-B- 2 241 504
- FR-A- 1 453 583
- PATENT ABSTRACTS OF JAPAN, Vol. 7, No. 5, M-184; & JP,A,57 163 776 (SHIGENOBU TANEDA), 8 October 1982.

## Description

The present invention relates to a device designed for pressure and flow control respectively in a cooling or heating system and is set forth in more detail in the preamble of patent claim 1.

In such systems pressure as well as flow variations exist and it is desirable to be able to keep the pressure as well as the flows constant.

By DE-A-3 828 367, there is previously known an apparatus for limitation of pressure in a hot-water-heating system, comprising an overpressure valve. The apparatus shows four connectors and a control valve, which is influenced by a compression spring tending to shut one connector in relation to the other connectors.

The known devices in this field are often designed solely for pressure control but not simultaneously for flow control. The known devices for flow control are vice versa often not suitable for also achieving a pressure control. Also, the known devices often are complicated as regards their construction and their mode of operation and consequently are expensive to manufacture, mount and maintain, their reliability and their life also being unsatisfactory. A particular drawback may be that when it is not possible to limit a pressure drop over a valve to a level, for which it is designed, there is a risk that the high pressure level instead generates noise due to high sound levels.

The purpose of the present invention is to improve, as regards what has been mentioned above, the known devices in this field and suggest a novel device, which is simple to manufacture and mount (assemble) and which is reliable when used and has a long life. Also, the purpose of the invention is to in various other respects develop the state of the art in this field.

These purposes are attained in accordance with the invention by designing a device of the type described above mainly in the way set forth in the characterizing clause of patent claim 1.

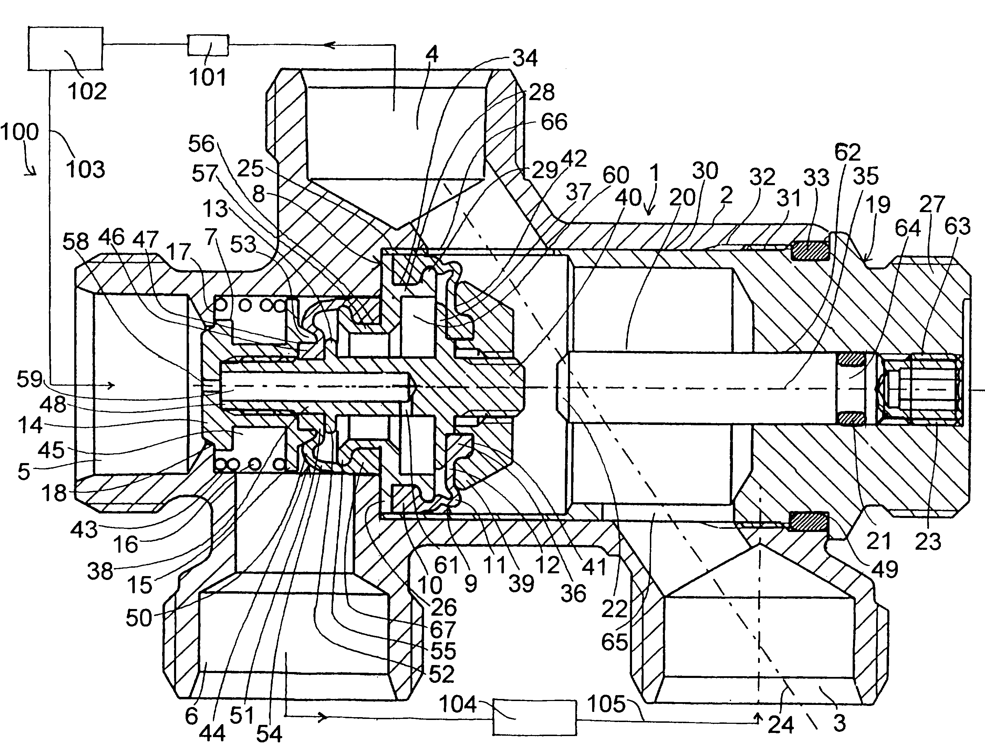

Additional characterizing features and advantages of the present invention are set forth in the following description , reference being made to the enclosed drawing, which shows a preferred but not limiting embodiment. Thus, the drawing shows a diametrical longitudinal cross-section of a device according to the invention, in a closed condition.

In the drawing a device 100 according to the present invention is shown in its entirety, whereas a valve device 1 according to the invention is included in device 100. This valve device comprises a house 2 having a connection piece 3 for incoming supply medium, particularly hot and cold water, a connection piece 4, through which and a conduit 103 said medium flows from the valve to a check valve 101, one or several radiators 102 and a connection piece 5 for return water, which flows to the valve from the radiator and the radiators respectively, whereas finally a connection piece 6 is used to return water from the valve, which return water via a conduit 105 and a heating or cooling unit 104 returns with a particular temperature to connection piece 3. All these connection pieces preferably are located in the same plane.

Connection pieces 5 and 6 communicate with and respectively are separated from each other via a control valve 7, whereas connection pieces 3 and 4 communicate with each other via a passage 24. Besides through control valve 7 in a conditional way connection piece 5 is as regards the flow separated from passage 24 by means of a large membrane 9, which is fastened in the house or in a plug 19, similar to a sleeve, which jointly with parts, which will be described below, constitute an assembly unit, which is a preferred solution as regards the method of assembly. Sleeve part 25 and plug 19 preferably has a slightly thicker wall in the axial central portion, whereas the free sleeve part end is considerably thinner. The thicker wall part faces connection piece 3 and has an opening 65 for passage 24, which extends in the shown embodiment obliquely towards connection piece 4, in relation to which the thinner wall portion is exposed and is provided with an equivalent 66 to opening 65. Opening 65 and/or 66 may in special cases be given special dimensions, i.e. act as choke means or the equivalent choke action may be achieved through position adjustment (rotation) in relation to the respective connection pieces 3, 4 and to passages leading to the same respectively.

Membrane 9 is fastened in the free sleeve end of plug 19 by means of a holder ring 8, which jointly with the membrane is retained through press fit. The holder ring includes a radially directed ring flange 26, which accomplishes said press fit of the ring and is fastened in the outmost part of sleeve part end 25. From flange 26 a ring base 28 projects, roughly at the same level as half the radial flange width, directed towards base part 27 of the plug, which projects from the valve house and concentrically inwardly displaced, which ring base at its free end has a radially outwardly directed bead 29, which ends at a short distance from the inner wall of the sleeve part or possibly a cylindrical bore 30 in house 2, which bore is concentrical as regards connection piece 5 and communicates with it as well as recieves said plug 19 with a slide and friction fit respectively, which with an outer thread 31 is screwed into an inner thread 32 at the entry to said bore, an O-ring 33, introduced in a groove 49, which surrounds base part 27, securing the sealing outwardly.

In the described manner the holder ring forms a radially outwardly and to a lesser degree axially towards the base part open groove 34, which is filled by a thicker annual outer membrane base 10, which extends in a thinner shape beyond bead 29 and slightly around it, slightly following its contour inwards towards the axial center 35, and then extends slightly obliquely inwards, forming a ring fold 11, in connection with which membrane 9 roughly extends in a radial plane 12 and ends as the thicker annular inner membrane base 36, which is similar to the already described outer base 10 and which is fastened between a larger ring flange 37 of a piston spindle 38 on the side, which is facing base part 27 and a lock washer 39, which on the base part side is screwed on a threaded spindle end 40 and contains a groove 41, which is similar to the groove described above, its opening however being axially directed towards ring flange 37 and a constriction 42, at which the thinner membrane part starts, situated between the ring flange and the bottom side of the washer, which is facing it, which washer suitably in a diametrical axial cross-section roughly is trapetzoidal.

In plug 19 a check bolt 20 is screwed on from the outside in a central, at its outer end threaded, for the rest flat bore 62 och it has a matching outer thread 63 at its outer end, which is provided with e.g. a hexagon hole 23 for the insertion of av hexagon spanner. Inside the flat part of bore 62 bolt 20 is surrounded by a annular groove 24, in which an O-ring 21 is placed, designed as a sealing outwardly. Inner end 22 of check bolt 20 is designed to contact spindle end 40 in order to in this manner temporarily shut valve 7.

Piston spindle 38 extends like a rod from washer 39 towards connection piece 5 and is, inside a bore 43, which leads to connection piece 5 and is concentric as to bore 30 and has a smaller diameter than bore 30, provided with a smaller ring flange 13, against which a small membrane 44 is fastened, which in an analogous manner as regards the larger membrane 9 is provided with a thicker annular inner membrane base 46, inserted into an annular groove 47 in a piston part 14, which is screwed on spindle end 48, which is turned away from washer 39. The ratio of the cross-sectional surfaces of bores 30 and 43 is 1,5-7:1, preferably approximately 3:1. Similar to larger membrane 9 and its fastening, but turned in the opposite direction, smaller membrane 44 has a fold 50, one in the radial direction very short flat central part 51, one constriction 52 between ring flange 13 and a ring cam 53, which projects axially from a rear piston part flange 15 and surrounds piston spindle 38 concentrically. Membrane 44 follows mainly all around the ring cam contour in the interior as well as the exterior side and finally extends with a mainly axially extended section 54, beyond bead 55 in a groove 56 radially outside a ring base 57, which starts from the inner end of ring flange 26, in order to be fastened in the groove to an outer membrane base 67, which by means of a slide or friction fit, designed as a ring sealing, is inserted into the respective end of bore 43.

Between piston part flange 15 and a ring end 17, which defines bore 43 towards connection piece 5, a screw-shaped compression spring 16 extends, which consequently strives to displace piston part 14 from a seat 18, formed by house 2 at said ring end 17, against which seat piston part 14 abuts from the interior of bore 43.

Piston part 14 is provided with a central axial hole 58, to which an axial spindle cavity 59 is connected, which in the area below the two membranes communicate with a control room 60 via a push conduit 61. Thus, this control room is formed and defined roughly radially inwardly by the piston spindle, radially outwardly by ring flange 26 and by parts integrated with the latter as well as by to some degree in the radially direction by membrane of their own, a continuous communication with connection pieces 5 via cavities 58, 59 and 61 being achieved. Smaller membrane 44 is permitted to expand and contract respectively as regards a cavity 45, connected to connection piece 6, whereas larger membrane 9 is permitted to expand and contract respectively as regards passage 24, i.e. the cavity connected to and located between connection pieces 3 and 4. In this situation a cooperation between a plurality of factors, a mutual dependency among them and an influence by them exits, namely:
1) the pressure in passage 24;
2) the pressure in connection piece 5;
3) the pressure in connection piece 6;
4) the pressure of spring 16, which besides other factors permits an opening and a closing of valve 7 respectively and consequently a lowering and a raising respectively of the pressure, which propagates into control room 60;
5) the mutual size ratio of the two membranes ; and
6) the mutual size ratio of the two ring flanges 13 and 37 and lock washer 39.

The drawing shows the valve device in its entirely closed position, which means that the differential pressure between passage 24 and the area inside connection piece 5 e.g. is higher than 20 000 mm WC. The prestressing force of the spring reaches e.g. 1000 - 3000 mm WC and the piston stroke of the control valve is e.g. 0,1 - 10 mm, preferably not more than 1 mm.

When now the differential pressure drops to below the threshold value, e.g. 15 000 mm WC, pressure medium will be fed from connection piece 5 into the control room and act on the large membrane from the inside due to an increasing pressure. This pressure, increasing, constant or decreasing, also act on the control valve, from behind so to speak, i.e. in a direction away from area 45, now and then against the action of the compression spring, now and then in the opposite direction. In a corresponding way the pressure in passage 24 influences large membrane 9 and parts connected to the same and either and respectively partly by means of the piston spindle and/or by means of the membranes an influence on control valve 7 is achieved, the movements of which also are suppressed due to this design and partly the relative stiffness of the membranes and partly the control room and the comparatively narrow flow paths, which lead to it, which requires some time for the passage of the flow medium. We have found, that such a valve device is able to maintain the pressure and flow constant to a high degree, no relatively high sound levels being generated.

## Claims

1. A device (100) for pressure and flow control respectively in cooling or heating systems (101-105), which comprises a valve device (1), which has a housing (2) with one connection piece (3) for incoming supply medium, particularly hot or cold water, one connection piece (4) for outgoing supply medium, a continuously open passage (24) connecting these connection pieces, one connection piece (5) for incoming return medium and a connection piece (6) for outgoing return medium, a control valve (7), which is influenced by a compression spring (16), tending to shut the outlet side (6) of the return medium in relation to its inlet side (5) and being designed to control the medium flow within and through respectively the valve device (1), **characterized** in that said control valve (7) is hollow and has a piston spindle (38), which carries at one of its ends a piston part (14), which acts against said return side (5) and at its other end, exposed to said passage (24), and in a central position, a membrane device (9,44), which includes a control room (60), which via cavities (58,59,61) in the piston part (14) and in the piston spindle (38) communicates with the return inlet side (5).

2. A device according to claim 1, **characterized** in that the cooling or heating system in a way known per se comprises a duct (103), which comes from connection piece (4) for outgoing supply medium and which via a check or radiator valve (101) and one or more radiators (102) continues to the connection piece (5) for incoming return medium, whereas the connection piece (6) for outgoing return medium via a conduit (105) and a cooling assembly (104), mounted in this conduit, leads to and is connected to the connection piece (3) for incoming supply medium.

3. A device according to claim 1, **characterized** in that the membrane device (9,44) comprises a large membrane (9), which, when exposed to the passage (24), is fastened in the house (2) or in a sleeve-like plug (19), which is a part of an assembly unit, and a small membrane (44), which externally is exposed to the connection piece (6) for outgoing return medium and internally communicates with the connection piece (5) for incoming return medium.

4. A device according to claim 3, **characterized** in that the plug (19) is inserted in a bore (30) in the house (2), which bore (30) is concentric as regards the connection piece (5) for incoming return medium and communicates as such with said connection piece (5) and in which the plug (19) is screwed with an outer compact or more compact base part (27) with an external thread (31) and preferably has an external annular groove (49) and an O-ring (33), inserted in this groove, that the plug (19) in its axial central part preferably has a thicker wall than the free sleeve part end, and that the passage (24) suitably extends obliquely through the sleeve part (25), in which it is provided with openings (65,66), which permit a mutual communication between the supply medium connection pieces (3,4), possibly with an adjustable or predimensioned check action.

5. A device according to any of claims 1-4, **characterized** in that the large membrane (9) is fastened in the free sleeve part end (25) of the plug (19) by means of a holder ring (8), which jointly with the membrane is retained by press fit, and that the holder ring (8) comprises a radially extended ring flange (26), which exerts said press fit and is fastened in the outmost part of the sleeve part end (25).

6. A device according to claim 5, **characterized** in that from the ring flange (26) a ring base (28) concentrically issues, preferably at the same level as half the radial flange width, in the direction of the base part (27) of the plug (19), which ring base at its free end has a radially outwardly directed ring bead (29), which is terminated at a short distance from the inner wall of the sleeve part (25) and said bore (30) respectively, in order to with the ring flange and the ring base form a groove (34), which is open radially outwardly and to a lesser extent towards the base part (27), which groove is filled with a thicker annular outer membrane base (10), which continues in a thinner shape beyond the bead (29) and somewhat around it and then preferably extends slightly obliquely outwards to form a ring fold (11) and in connection with this with roughly a radial plane extension (12) and is terminated with a thicker inner annular membrane base (36), which is fastened between a larger ring flange (37), which surrounds the piston spindle (38) and a lock washer (39), which is exposed to the passage (24) and is fastened to the piston spindle (38).

7. A device according to any of claims 1-6, **characterized** in that in the plug (19) from the outside a check bolt (20) is screwed into a central bore (62), which is threaded at its outer end, the inner end (22) of the check bolt being designed to be brought into contact with an adjacent end (40) of the piston spindle (38) in order to temporarily shut the control valve (7).

8. A device according to any of claims 1-7, **characterized** in that the piston spindle (38) has a rod-like shape and is, inside one with the bore (30) for the plug (19) and the larger membrane (9) concentric, to the connection piece (5) for incoming return medium leading bore (43) with a smaller diameter than the first-mentioned bore (30), provided with a ring flange (13), against which said smaller membrane (44) with an inner thicker annular membrane base (46) is fastened and inserted into an annular groove (47) in said piston part (14), which is fastened to the piston spindle (38).

9. A device according to claim 8, **characterized** in that the cross-sectional surfaces of the bore (30) for the plug (19) and the larger membrane (9) respectively and the bore (43) for i.a. the smaller membrane (44) have a size ratio of 1.5-7:1, preferably approximately 3:1.

10. A device according to any of claims 1-9, **characterized** in that the smaller membrane (44) has a fold (50), which in the axial direction is turned away from the larger membrane(9), a central part (51), which in a radial plane is flat and very short, a constriction (52) between the smaller ring flange (13) and a ring cam (53), which extends axially from a rear piston part flange (15) and surrounds the piston spindle (38) concentrically, that the smaller membrane (44) preferably mainly follows around all the ring cam contour and extends with a mainly axially directed section (54) beyond a bead (55) into a groove (56) radially outside a ring base (57), which starts from the inner end of the ring flange (26), in order to in said groove (56) be fastened with an outer membrane base (67), which with a slide or friction fit, also acting as a ring sealing, is inserted into one end of the smaller bore (43), which is turned away from the control valve (7).

11. A device according to any of claims 1-10, **characterized** in that the piston part (14) is provided with a central axial hole (58), to which an axial spindle cavity (59) is connected, which in the area between the two membranes (9,44) communicates with the control room (60) via a push passage (61), which control room mainly is defined radially inwards by the piston spindle (38), radially outwards by the ring flange (26) and parts (28,57), which are integrated with it, as well as in axial direction and to some extent in radial direction by two respective mumbranes (9 and 44 respectively), the smaller membrane (44) being exposed to a cavity (45) in connection with the connection piece (6), designed for outgoing return medium, whereas the larger membrane (9) is exposed to the passage (24).

12. A device according to any of claims 1-11, **characterized** in that the action on and the movements of the control valve (7) are caused by any or several of the following parameters :
1) the pressure in the passage (24);
2) the pressure in the connection piece (5) for incoming return medium;
3) the pressure in the connection piece (6) for outgoing return medium;
4) the pressure of the spring (16);
5) the mutual size ratio of the two membranes; and
6) the mutual size ratio of the two ring flanges (13,37) and the lock washer (39) respectively.

## Patentansprüche

1. Vorrichtung (100) zur Regelung des Druckes bzw. der Strömung in Kühl- oder Heizanlagen (101-105), mit einer Ventilanordnung (1) mit einem Gehäuse (2) mit einem Stutzen (3) für einströmendes Zulaufmedium, insbesondere Heiss- oder Kühlwasser, einem Stutzen (4) für austretendes Zulaufmedium, wobei eine ständig offene Passage (24) diese Stutzen miteinander verbindet, einem Stutzen (5) für einströmendes Rücklaufmedium und einem Stutzen (6) für austretendes Rücklaufmedium, wobei ein von einer Druckfeder (16) beeinflusstes Regulierventil (7) dazu tendiert, die Ausgangsseite (6) des Rücklaufmediums gegenüber dessen Eingangsseite (5) zu schliessen und dazu vorgesehen ist, den Mediumfluss innerhalb der Ventilanordnung (1) bzw. durch diese hindurch zu regulieren, **dadurch gekennzeichnet, dass** das Regulierventil (7) hohl ausgeführt ist mit einer Kolbenspindel (38), welche an ihrem einen Ende einen Kolbenteil (14) trägt, der gegen genannte Rücklaufeingangsseite (5) wirkt, und die an ihrem anderen, der genannten Passage (24) zugewendeten Ende sowie mittig eine Membranvorrichtung (9, 44) trägt, welche eine Regulierkammer (60) umfasst, die über Hohlräume (58, 59, 61) im Kolbenteil (14) und in der Kolbenspindel (38) mit der Rücklaufeingangsseite (5) kommuniziert.

2. Vorrichtung nach Anspruch 1, **dadurch gekennzeichnet, dass** das Kühl- oder Heizsystem auf an und für sich bekannte Weise eine vom Stutzen (4) für austretendes Zulaufmedium ausgehende Leitung (103) besitzt, welche über ein Drossel- oder Heizkörperventil (101) und einen oder mehrere Heizkörper (102) zum Stutzen (5) für einströmendes Rücklaufmedium sich fortsetzt, während der Stutzen (6) für austretendes Rücklaufmedium über eine Leitung (105) und ein in diese eingeschaltetes Heiz- oder Kühlaggregat (104) zu dem Stutzen (3) für einströmendes Zulaufmedium führt oder mit diesem verbunden ist.

3. Vorrichtung nach Anspruch 1, **dadurch gekennzeichnet, dass** die Membranvorrichtung (9, 44) eine grössere Membrane (9) besitzt, die der Passage (24) zugewendet und im Gehäuse (2) oder in einem hülsenähnlichen Pfropfen (19) verankert ist, welcher zu einer Montageeinheit gehört, sowie mit einer kleineren Membrane (44), deren Äusseres dem Stutzen (6) für ausgehendes Rücklaufmedium zugewendet ist, und deren Inneres mit dem Stutzen (5) für eintretendes Rücklaufmedium kommuniziert.

4. Vorrichtung nach Anspruch 3, **dadurch gekennzeichnet, dass** der Pfropfen (19) in eine Bohrung (30) im Gehäuse (2) eingeführt ist, welche Bohrung (30) zu dem Stutzen (5) für einströmendes Rücklaufmedium konzentrisch ist und als solcher mit genanntem Stutzen (5) kommuniziert, und in welche Bohrung der Pfropfen (19) mit einem äusseren kompakten oder mehr kompakten Grundteil (27) mit einem Aussengewinde (31) eingeschraubt ist und vorzugsweise eine äussere Ringnut (49) mit einem hierin eingeführten O-Ring (33) aufweist, dass der Pfropfen (19) axial mittig vorzugsweise eine dickere Wandung aufweist als das freie Hülsenteilende, und dass die Passage (24) sich vorzugsweise schräg durch den Hülsenteil (25) erstreckt, wo dieser mit Öffnungen (56, 66) versehen ist, welche eine interne Kommunikation zwischen den Zulaufmediumstutzen (3, 4) gestatten, eventuell mit einstellbarer oder vordimensionierter Drosselwirkung.

5. Vorrichtung nach wenigstens einem der Ansprüche 1-4, **dadurch gekennzeichnet, dass** die grössere Membrane (9) im freien Hülsenteilende (25) des Pfropfens mittels eines Halteringes (8) verankert ist, der zusammen mit der Membrane durch Presspassung zurückbehalten wird, und dass der Haltering (8) einen radial orientierten Ringflansch (26) besitzt, der genannte Presspassung erzeugt und im äussersten Teil des Hülsenteilendes (25) befestigt ist.

6. Vorrichtung nach Anspruch 5, **dadurch gekennzeichnet, dass** vom Ringflansch (26) vorzugsweise in Höhe mit der halben radialen Flanschbreite in Richtung zum Grundteil (27) des Pfropfens konzentrisch eine Ringbasis (28) ausgeht, welche an ihrem freien Ende einen radial nach aussen gerichteten Ringwulst (29) aufweist, der auf kurzem Abstand von der Innenwand des Hülsenteiles (25) bzw. genannter Bohrung (30) endet, um mit dem Ringflansch und der Ringbasis eine radial nach aussen und zu einem geringeren Teil axial zum Grundteil (27) hin offene Rinne (34) zu bilden, die mit einer dickeren ringförmigen äusseren Membranbasis (10) ausgefüllt ist, welche in dünnerer Form an dem Wulst (29) vorbei und etwas um diesen herum sich fortsetzt, um alsdann sich vorzugsweise etwas schräg nach aussen zu erstrecken unter Bildung einer Ringfalte (11) und im Anschluss hieran mit etwa radialer ebenen Ausdehnung (12) und um in einer dickeren inneren ringförmigen Membranbasis (36) abgeschlossen zu werden, die zwischen einem grösseren, die Kolbenspindel (38) umgebenden Ringflansch (37) und einer der Passage (24) zugewendeten Arretierscheibe (39) festgespannt ist, die auf der Kolbenspindel (38) befestigt ist.

7. Vorrichtung nach wenigstens einem der Ansprüche 1-6, **dadurch gekennzeichnet,** d a s s von aussen in den Pfropfen (19) in eine zentrale am äusseren Ende mit Gewinde versehene Bohrung (62) ein Stoppbolzen (20) eingeschraubt ist, dessen inneres Ende (22) dazu vorgesehen ist, zur Anlage an ein nahe gelegenes Ende (40) der Kolbenspindel (38) gebracht werden zu können, um das Regulierventil (7) momentan zu schliessen.

8. Vorrichtung nach wenigstens einem der Ansprüche 1-7, **dadurch gekennzeichnet,** d a s s die Kolbenspindel (38) stabähnliche Form besitzt und innerhalb einer zu der Bohrung (30) für den Pfropfen (19) bzw. der grössten Membrane (9) konzentrischen, zum Stutzen (5) für eintretendes Rücklaufmedium führenden Bohrung (43) mit geringerem Durchmesser als die erstgenannte Bohrung (30) mit einem Ringflansch (13) versehen ist, an welchem genannte kleinere Membrane (44) festgespannt ist mit einer inneren dickeren ringförmigen Membranbasis (46) eingeführt in eine ringförmige Rinne (47) in genanntem, an der Kolbenspindel (38) festgesetzten Kolbenteil (14).

9. Vorrichtung nach Anspruch 8, **dadurch gekennzeichnet, dass** die Querschnittsflächen der Bohrung (30) für den Pfropfen (19) bzw. die grössere Membrane (9) und der Bohrung (43) für u.a. die kleinere Membrane (44) sich wie 1,5-7:1 verhalten, vorzugsweise angenähert wie 3:1.

10. Vorrichtung nach wenigstens einem der Ansprüche 1-9, **dadurch gekennzeichnet, dass** die kleinere Membrane (44) eine in axialer Richtung von der grösseren Membrane (9) gewendete Falte (50) aufweist sowie einen in radialer Richtung sehr kurzen ebenen Mittelteil (51), eine Verengung (52) zwischen dem kleineren Ringflansch (13) und einem Ringkamm (53), welcher axial abragt von einem hinteren Kolbenteilflansch (15) und die Kolbenspindel (38) konzentrisch umgibt, dass die kleiner Membrane (44) vorzugsweise im wesentlichen der gesamten Ringkammkontour herum folgt und sich mit einem hauptsächlich axial laufenden Abschnitt (54) an dem Wulst (55) vorbei erstreckt in eine Rinne (56) hinein radial ausserhalb einer Ringbasis (57), welche vom inneren Ende des Ringflansches (26) ausgeht, um in genannter Rinne (56) mit einer äusseren Membranbasis (67) verankert zu werden, welche mit Gleit- oder Friktionspassung, die auch als eine Ringdichtung wirkt, in das Ende der kleineren Bohrung (43) eingeführt ist, welche vom Regulierventil (7) abgewendet ist.

11. Vorrichtung nach wenigstens einem der Ansprüche 1-10, **dadurch gekennzeichnet, dass** der Kolbenteil (14) mit einer zentralen axialen Bohrung (58) versehen ist, an welche ein axialer Spindelhohlraum (59) anschliesst, welcher im Bereich zwischen den beiden Membranen (9, 44) mit der Regulierkammer (60) über einen Stichkanal (61) kommuniziert, welche Regulierkammer im wesentlichen radial nach innen von der Kolbenspindel (38) begrenzt wird sowie radial nach aussen vom Ringflansch (26) und mit diesem integrierten Teilen (28, 57) sowie in axialer Richtung und gewissermassen in radialer Richtung von der jeweiligen Membrane (9 bzw. 44), wobei die kleinere Membrane (44) einem Raum (45) im Anschluss an den Stutzen (6) für austretendes Rücklaufmedium zugewendet ist, während die grössere Membrane (9) der Passage (24) zugewendet ist.

12. Vorrichtung nach wenigstens einem der Ansprüche 1-11,**dadurch gekennzeichnet, dass** der Einfluss bzw. die Bewegungen des Regulierventils (7) ein Resultat von einem oder mehreren folgender Parameter ist:
1) dem Druck in der Passage (24);
2) dem Druck im Stutzen (5) für eintretendes Rücklaufmedium;
3) dem Druck im Stutzen (6) für austretendes Rücklaufmedium;
4) dem Druck der Feder (16);
5) der Grössenbeziehung der beiden Membranen zueinander;
6) der Grössenbeziehung der beiden Ringflansche (13, 27) bzw. der Arretierscheibe (39) zueinander.

## Revendications

1. Dispositif (100) pour le réglage respectivement de la pression et de l'écoulement dans les systèmes de refroidissement ou de chauffage (101-105), qui comprend un dispositif de soupape (1) qui possède un carter (2) muni d'un raccord (3) pour l'entrée du milieu d'alimentation, en particulier de l'eau chaude ou de l'eau froide, un raccord (4) pour la sortie du milieu d'alimentation, un passage (24) ouvert en continu établissant une connexion entre ces raccords, un raccord (5) pour l'entrée du milieu de retour et un raccord (6) pour la sortie du milieu de retour, une soupape de commande (7), qui est influencée par un ressort de compression (16), ayant tendance à fermer le côté sortie (6) du milieu de retour par rapport à son côté entrée (5) et étant conçue pour régler l'écoulement du milieu respectivement à l'intérieur et à travers le dispositif de soupape (1), caractérisé en ce que ladite soupape de commande (7) est creuse et possède une tige de piston (38) qui porte, à une de ses extrémités, un élément de piston (14) qui agit sur ledit côté entrée (5) du milieu de retour et, à son autre extrémité, exposé audit passage (24) et en position centrale, un dispositif à membrane (9, 44) qui englobe une chambre de commande (60) qui, via des cavités (58, 59, 61) pratiquées dans la partie de piston (14) et dans la tige de piston (38), communique avec le côté entrée (5) du milieu de retour.

2. Dispositif selon la revendication 1, caractérisé en ce que le système de refroidissement ou de chauffage, d'une manière connue en soi, comprend un conduit (103) qui provient d'un raccord (4) pour la sortie du milieu d'alimentation et qui, via une soupape d'arrêt ou une soupape de radiateur (101) et via un ou plusieurs radiateurs (102), se prolonge jusqu'au raccord (5) pour l'entrée du milieu de retour, tandis que le raccord (6) pour la sortie du milieu de retour, via un conduit (105) et un assemblage de refroidissement (104) monté dans ce conduit, mène et est connecté au raccord (3) pour l'entrée du milieu d'alimentation.

3. Dispositif selon la revendication 1, caractérisé en ce que le dispositif à membrane (9, 44) comprend une grande membrane (9) qui, lorsqu'elle est exposée au passage (24), est fixée dans le carter (2) ou dans un bouchon (19) en forme de manchon qui fait partie d'un assemblage unitaire, et une petite membrane (44) qui, du côté externe, est exposée au raccord (6) pour la sortie du milieu de retour et, du côté interne, communique avec le raccord (5) pour l'entrée du milieu de retour.

4. Dispositif selon la revendication 3, caractérisé en ce que le bouchon (19) est inséré dans un alésage (30) pratiqué dans le carter (2), ledit alésage (30) étant concentrique par rapport au raccord (5) pour l'entrée du milieu de retour et communiquant comme tel avec ledit raccord (5), et dans lequel le bouchon (19) est vissé avec un élément de base compact ou plus compact externe (27) muni d'un filet de vis externe (31) et possède de préférence une rainure annulaire externe (49) et un joint torique (33) inséré dans cette rainure, en ce que le bouchon (19), dans sa partie centrale axiale, possède de préférence une paroi plus épaisse que celle de l'extrémité libre de l'élément en forme de manchon, et en ce que le passage (24) s'étend de manière appropriée en oblique à travers l'élément (25) en forme de manchon dans lequel sont pratiquées des ouvertures (65, 66) qui permettent d'établir une communication réciproque entre les raccords (3, 4) pour le milieu d'alimentation, le cas échéant avec une action d'arrêt réglable ou prédimensionnée.

5. Dispositif selon l'une quelconque des revendications 1 à 4, caractérisé en ce que la grande membrane (9) est fixée dans l'extrémité libre (25) du bouchon (19) en forme de manchon à l'aide d'un anneau de retenue (8) qui est maintenu à l'aide d'une insertion à force de manière conjointe avec la membrane et en ce que l'anneau de retenue (8) comprend une bride annulaire (26) s'étendant en direction radiale, qui met en oeuvre ladite insertion à force et qui est fixée dans la partie externe de l'extrémité (25) de l'élément en forme de manchon.

6. Dispositif selon la revendication 5, caractérisé en ce qu'une base annulaire (28) s'étend, en position concentrique à partir de la bride annulaire (26), de préférence au niveau de la moitié de la largeur de la bride radiale, dans la direction de la partie de base (27) du bouchon (19), ladite base annulaire possédant, à son extrémité libre, une nervure annulaire (29) orientée vers l'extérieur en direction radiale, qui se termine à courte distance de la paroi interne de l'élément (25) en forme de manchon et dudit alésage (30), respectivement, dans le but de former, avec la bride annulaire et la base annulaire, une rainure (34) qui est ouverte vers l'extérieur en direction radiale et dans une moindre mesure, en direction de la partie de base (27), ladite rainure étant remplie avec une base de membrane externe annulaire plus épaisse (10) qui se prolonge en une forme plus mince au-delà de la nervure (29) et quelque peu autour de cette dernière, puis s'étend de préférence légèrement en oblique vers l'extérieur pour former un pli annulaire (11) et, de manière conjointe avec ce dernier, un prolongement s'étendant grosso modo dans un plan radial, et qui se termine par une base de membrane annulaire interne plus épaisse (36) qui est fixée entre une bride annulaire plus grande (37) qui entoure la tige de piston (38) et une rondelle d'arrêt (39) qui est exposée au passage (24), et qui est fixée à la tige de piston (38).

7. Dispositif selon l'une quelconque des revendications 1 à 6, caractérisé en ce que, dans le bouchon (19), est vissé, depuis l'extérieur, un boulon d'arrêt (20) dans un alésage central (62) qui est muni d'un filet de vis à son extrémité externe, l'extrémité interne (22) du boulon d'arrêt étant conçue pour être amenée en contact avec une extrémité adjacente (40) de la tige de piston (38) dans le but de fermer temporairement la soupape de commande (7).

8. Dispositif selon l'une quelconque des revendications 1 à 7, caractérisé en ce que la tige de piston (38) est réalisée en forme de tige et est munie, à l'intérieur d'un alésage (43) qui mène au raccord (5) pour l'entrée du milieu de retour, qui est concentrique avec l'alésage (30) pour le bouchon (19) et avec la grande membrane (9) et dont le diamètre est inférieur à celui de l'alésage (30) mentionné en premier lieu, d'une bride annulaire (13) contre laquelle ladite petite membrane (44) est fixée avec une base de membrane annulaire interne plus épaisse (46) et insérée dans une rainure annulaire (47) pratiquée dans ladite partie de piston (14) qui est fixée à la tige de piston (38).

9. Dispositif selon la revendication 8, caractérisé en ce que les surfaces en section transversale de l'alésage (30) pour le bouchon (19) et de la grande membrane (9), respectivement, et de l'alésage (43) pour entre autres la petite membrane (44) possèdent un rapport de dimensions de 1,5-7:1, de préférence d'approximativement 3:1.

10. Dispositif selon l'une quelconque des revendications 1 à 9, caractérisé en ce que la petite membrane (44) possède un pli (50) qui, dans la direction axiale, se détourne de la grande membrane (9), une partie centrale (51) qui, dans un plan radial, est plate et très courte, un étranglement (52) entre la bride annulaire plus petite (13) et une came d'anneau (53), qui s'étend en direction axiale depuis une bride (15) de la partie arrière de piston et qui entoure la tige de piston (38) en position concentrique, en ce que la petite membrane (44) suit de préférence principalement tout le contour de la came de l'anneau et s'étend, avec une section (54) dirigée principalement en direction axiale, au-delà d'une nervure (55) dans une rainure (56) en direction radiale à l'extérieur d'une base annulaire (57) qui part de l'extrémité interne de la bride annulaire (26) dans le but d'être fixée, dans ladite rainure (56), avec une base de membrane externe (67) qui, avec une insertion par glissement ou par friction, faisant également office d'étanchéisation annulaire, est insérée dans l'extrémité de l'alésage plus petit (43) qui se détourne de la soupape de commande (7).

11. Dispositif selon l'une quelconque des revendications 1 à 10, caractérisé en ce que la partie de piston (14) est munie d'un trou axial central (58) auquel est raccordée une cavité de tige axiale (59) qui, dans la zone s'étendant entre les deux membranes (9, 44), communique avec la chambre de commande (60) via un passage de poussée (61), ladite chambre de commande étant définie principalement en direction radiale vers l'intérieur par la tige de piston (38), en direction radiale vers l'extérieur par la bride annulaire (26) et par les parties (28, 57) qui sont solidaires de la première citée, ainsi qu'en direction axiale et dans une certaine mesure, en direction radiale par deux membranes respectives (9 et 44, respectivement), la petite membrane (44) étant exposée à une cavité (45) reliée au raccord (6) pour la sortie du milieu de retour, tandis que la grande membrane (9) est exposée au passage (24).

12. Dispositif selon l'une quelconque des revendications 1 à 11, caractérisé en ce que l'action sur la soupape de commande (7) et les mouvements de cette dernière sont provoqués par un ou plusieurs de l'un quelconque des paramètres ci-après:
1) la pression régnant dans le passage (24);
2) la pression régnant dans le raccord (5) pour l'entrée du milieu de retour;
3) la pression régnant dans le raccord (6) pour la sortie du milieu de retour;
4) la pression exercée par le ressort (16);
5) le rapport des dimensions des deux membranes; et
6) le rapport des dimensions des deux brides annulaires (13, 37) et de la rondelle d'arrêt (39), respectivement.
